# EUROPEAN PATENT SPECIFICATION

(11) **EP 2 731 392 B1**
(45) Date of publication and mention of the grant of the patent: **14.11.2018**
(21) Application number: 12822232.0
(22) Date of filing: 13.08.2012
(51) Int. Cl.: H04W 74/00, H04W 72/10

(54) **METHOD AND APPARATUS FOR DATA TRANSMISSION OF UPLINK SHORT LATENCY COMMUNICATIONS**
VERFAHREN UND VORRICHTUNG ZUR DATENÜBERTRAGUNG VON AUFWÄRTSSTRECKENKOMMUNIKATIONEN VON KURZER LATENZZEIT
PROCÉDÉ ET DISPOSITIF DE TRANSMISSION DE DONNÉES DE COMMUNICATION DE LIAISON MONTANTE À FAIBLE LATENCE

(30) Priority: 11.08.2011 CN 201110229794
(43) Date of publication of application: 14.05.2014
(73) Proprietor: Huawei Technologies Co., Ltd., Longgang District Shenzhen, Guangdong 518129 (CN)
(72) Inventor: ZHU, Song, Shenzhen Guangdong 518129 (CN); ZHEN, Bin, Shenzhen Guangdong 518129 (CN); LI, Yue, Shenzhen Guangdong 518129 (CN); MA, Jie, Shenzhen Guangdong 518129 (CN)
(74) Representative: Körber, Martin Hans
(86) International application number: PCT/CN2012/080023
(87) International publication number: WO 2013/020525

(56) References cited:
- WO-A1-2008/078968
- WO-A1-2010/057540
- CN-A- 101 572 949
- CN-A- 101 682 417
- CN-A- 101 808 406
- US-A1- 2011 171 985
- ERICSSON ET AL: "Contention based uplink transmissions", 3GPP DRAFT; R2-093812_CONTENTION_BASED_UPLINK, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Los Angeles, USA; 20090623, 23 June 2009 (2009-06-23), XP050352029, [retrieved on 2009-06-23]
- ERICSSON: "LTE Advanced Latency Performance", 3GPP DRAFT; R2-092080, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Seoul, Korea; 20090317, 17 March 2009 (2009-03-17), XP050339941, [retrieved on 2009-03-17]

## Description

### TECHNICAL FIELD

The present invention relates to the field of wireless communications technologies, and in particular, to a data transmission method and device for uplink short-latency communication.

### BACKGROUND

The Internet of Things (for example, Machine to Machine, M2M for short) connects all things to the Internet by using information sensing devices, so as to implement intelligent recognition and management. Specifically, a combination of the Internet of Things and the Internet may implement remote sensing and control of all things, and therefore a living system is generated. Compared with the current Internet, the combination is much larger and is widely used in multiple fields, such as a smart grid, intelligent transportation, environment protection, government work, public security, smart household, smart fire extinguishing, industrial detection, elderly care, and personal health.

Currently, in certain application scenarios of the Internet of Things, a latency requirement is very strict. For example, according to certain communications requirements in the smart grid, it is expected that a communication latency is within 10 ms. However, a current cellular communications system is mainly designed for human to human (Human to Human; H2H for short) communication. For example, a Long Term Evolution (Long Term Evolution; LTE for short) system is used as an example. When a user equipment (User Equipment; UE for short) in an idle (Idle) state needs to send new uplink data, it first needs to establish a connection with a network, to change the Idle state to a Connect (Connect) state, and then transmits data. A relatively long latency exists in this process and is generally more than 50 ms (ms). Therefore, a short latency requirement of M2M communications is hard to meet. In addition, in some requirements of latency-sensitive communication in the smart grid, the amount of data is relatively small, and using a normal communication manner may cause exchange of a large amount of extra signaling and relatively low efficiency, and may even cause signaling congestion.
WO 2010 057540 A1 discloses a method for data transmission by user equipments adapted to transmit data using resource blocks allocated by a radio network. The method comprises the step of allocating at least one of the resource blocks that is not allocated to any dedicated user equipment to a first plurality of the user equipments.
WO 2010 057540 A1 describes a method for data transmission by user equipments adapted to transmit data using resource blocks allocated by a radio network. The radio network is adapted to allocate resource blocks to a dedicated one of the user equipments or to a plurality of the user equipments.
"Contention based uplink transmissions", Ericsson et al, 3GPP TSG-RAN R2-093812, introduces a framework for contention based uplink transmission in LTE for improving the user plane latency.
"LTE advanced latency performance", Ericsson, 3GPP TSG-RAN R2-092080, discusses the LTE advanced latency performance and options for reaching the 3GPP latency targets.

### SUMMARY

Embodiments of the present invention provide a data transmission method and device for uplink communication, which are used to avoid signaling congestion.

According to one aspect, a data transmission method for uplink communication is provided according to claim 1.

According to one aspect, a user equipment is provided according to claim 2.

Because a process for establishing a wireless resource control connection in the prior art is not required in the aspects according to claim 1 and 2, a problem of long latency in uplink communication of a user equipment in the prior art is effectively solved, a short-latency communication requirement is met with limited resources, and data transmission efficiency for the short-latency communication is significantly improved.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a flowchart of an embodiment of a data transmission method for uplink short-latency communication according to the present invention;
FIG. 2 is a flowchart of another embodiment of a data transmission method for uplink short-latency communication according to the present invention;
FIG. 3 is a flowchart of another embodiment of a data transmission method for uplink short-latency communication according to the present invention;
FIG. 4 is a flowchart of another embodiment of a data transmission method for uplink short-latency communication according to the present invention;
FIG. 5 is a flowchart of still another embodiment of a data transmission method for uplink short-latency communication according to the present invention;
FIG. 6 is a schematic structural diagram of an embodiment of a user equipment according to the present invention;
FIG. 7 is a schematic structural diagram of another embodiment of a user equipment according to the present invention;
FIG. 8 is a schematic structural diagram of still another embodiment of a user equipment according to the present invention;
FIG. 9 is a schematic structural diagram of an embodiment of a base station according to the present invention;
FIG. 10 is a schematic structural diagram of another embodiment of a base station according to the present invention; and
FIG. 11 is a schematic structural diagram of an embodiment of a data transmission system for uplink short-latency communication according to the present invention.

### DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

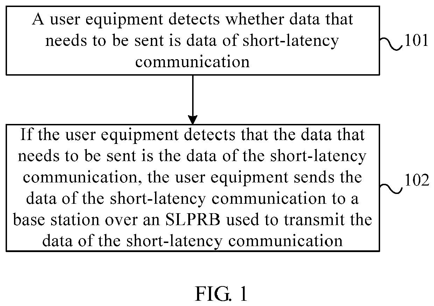

FIG. 1 is a flowchart of an embodiment of a data transmission method for uplink short-latency communication according to the present invention. As shown in FIG. 1, the method in this embodiment includes:
Step 101: A user equipment detects whether data that needs to be sent is data of short-latency communication.
Step 102: If the user equipment detects that the data that needs to be sent is the data of the short-latency communication, the user equipment sends, by using a short latency physical resource block (Short Latency Physical Resource Block, SLPRB), the data of the short-latency communication to a base station according to a pre-acquired transmission format, where the SLPRB includes time-and-frequency resources, and the short latency physical resource block is used to transmit the data of the short-latency communication.

In this embodiment, the base station may preconfigure a transmission format and sends the transmission format to the user equipment, where the transmission format includes a coding manner and a modulation manner. In addition, the data of the short-latency communication may include: a destination node address, a user equipment identifier, and data content, where the user equipment identifier may be a unique identifier carried by the user equipment itself; or may be a temporary user equipment identifier assigned by a network for the user equipment, so as to shorten the data length.

In this embodiment, a user equipment detects whether data that needs to be sent is data of short-latency communication, and sends, by using an SLPRB, the data of the short-latency communication to a base station according to a pre-acquired transmission format when detecting that the data that needs to be sent is the data of the short-latency communication. Because a process for establishing a wireless resource control connection in the prior art is not required, a problem of long latency in uplink communication of a user equipment in the prior art is effectively solved, a short-latency communication requirement is met with limited resources, and data transmission efficiency for the short-latency communication is significantly improved.

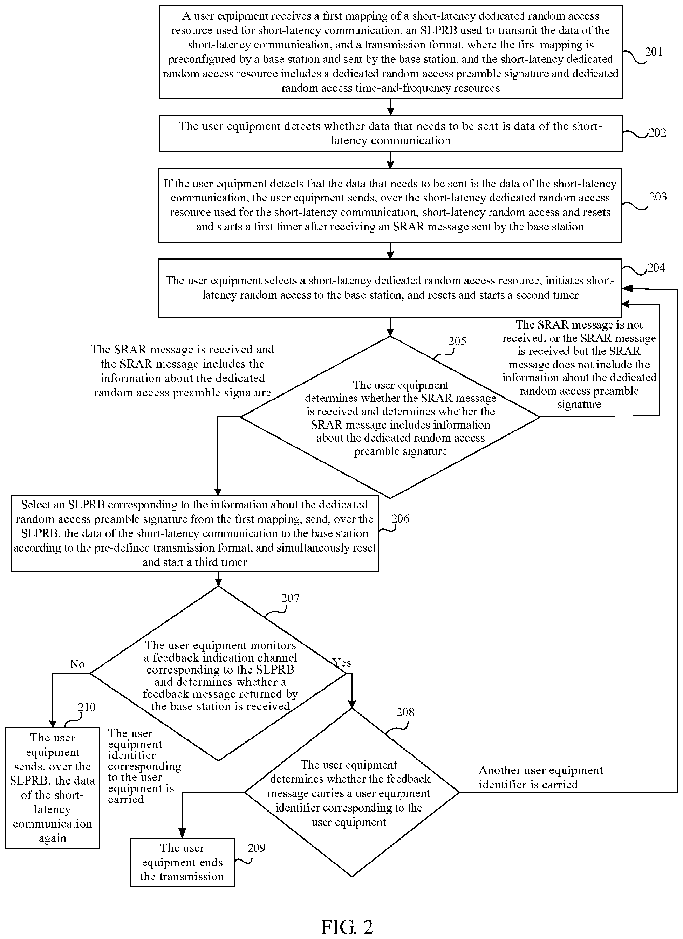

FIG. 2 is a flowchart of another embodiment of a data transmission method for uplink short-latency communication according to the present invention. In this embodiment, the technical solution in this embodiment is described in detail through an example where a user equipment needs to obtain uplink synchronization information. As shown in FIG. 2, the method in this embodiment includes:
Step 201: The user equipment receives a first mapping between a short-latency dedicated random access resource used for the short-latency communication, an SLPRB used to transmit data of the short-latency communication, and a transmission format, where the first mapping is preconfigured by a base station and sent by the base station, and the short-latency dedicated random access resource includes a dedicated random access preamble signature and dedicated random access time-and-frequency resources.
Step 202: The user equipment detects whether data that needs to be sent is the data of the short-latency communication.
Step 203: If the user equipment detects that the data that needs to be sent is the data of the short-latency communication, the user equipment sends, by using the short-latency dedicated random access resource used for the short-latency communication, a short-latency random access message and resets and starts a first timer after receiving a corresponding short latency random access response (Short latency Random Access Response; SRAR for short) message sent by the base station.

The first timer is used to calculate a total time required for the short-latency communication.

Step 204: The user equipment selects a short-latency dedicated random access resource, initiates a short-latency random access to the base station, and resets and starts a second timer, where the short-latency dedicated random access resource includes a dedicated random access preamble signature.

Specifically, the second timer is used to calculate a time for monitoring the corresponding SRAR message after the user equipment sends the random access.

Step 205: The user equipment determines whether the SRAR message is received and determines whether the SRAR message includes information about the dedicated random access preamble signature; and if the SRAR message is received and the SRAR message includes the information about the dedicated random access preamble signature, perform step 206; and if the SRAR message is not received, or the SRAR message is received but the SRAR message does not include the information about the dedicated random access preamble signature, perform step 204.

In this embodiment, the information about the dedicated random access preamble signature may specifically be a piece of indication information.

Step 206: Select from the first mapping an SLPRB corresponding to the information about the dedicated random access preamble signature, send, by using the SLPRB, the data of the short-latency communication to the base station according to the pre-defined transmission format, and simultaneously reset and start a third timer.

The data of the short-latency communication sent by using the SLPRB includes: a destination node address, a user equipment identifier, and data content.

In this embodiment, when determining that the received SRAR message carries the information about the dedicated random access preamble signature, the user equipment stops the second timer and records the number of times that the user equipment transmits the short-latency data as 1. In addition, the third timer is used to calculate a time for monitoring, after the data of the short-latency communication is sent, a feedback indication channel corresponding to the SLPRB that is used to transmit the data of the short-latency communication.

Step 207: The user equipment monitors the feedback indication channel corresponding to the SLPRB and determines whether a feedback message returned by the base station is received; and if yes, perform step 208; and if not, perform step 210.

In this embodiment, a conflict may occur because a contention-based solution is used. Therefore, to resolve contention and ensure successful transmission, each SLPRB used to transmit the data of the short-latency communication corresponds to a feedback indication channel used to transmit a feedback message.

Step 208: The user equipment determines whether the feedback message carries a user equipment identifier corresponding to the user equipment; and if the user equipment identifier corresponding to the user equipment is carried, perform step 209; and if another user equipment identifier is carried, perform step 204.

Step 209: The user equipment ends the transmission.

It should further be noted that if the data of the short-latency communication is relatively large and transmission cannot be completed at a time, the user equipment may continue to occupy the SLPRB to transmit the short-latency data and may omit transmission of the user equipment identifier till the base station is notified of the end of the transmission.

In this embodiment, when the base station is capable of successfully decoding the received data of the short-latency communication, the base station sends, by using the feedback indication channel, the feedback message that carries the user equipment identifier; according to a destination node address and the user equipment identifier in the data of the short-latency communication, applies to a core network for establishment of a bearer or selects from pre-established bearers a bearer matching the destination node address as a forwarding bearer; and forwards the data of the short-latency communication to the core network by using the forwarding bearer.

Step 210: The user equipment sends, by using the SLPRB, the data of the short-latency communication again and records the number of times that the user equipment transmits the short-latency data as 2.

It should be noted that if the time counted by the first timer exceeds a first preset time, that is, in the case of overflow, the user equipment may transmit the data of the short-latency communication in a normal communication manner. If the time counted by the first timer does not exceed the first preset time and the time counted by the third timer does not exceed a second preset time, the feedback indication channel corresponding to the SLPRB continues to be monitored. If the time counted by the first timer does not exceed the first preset time, the time counted by the third timer exceeds the second preset time, and the number of times that the short-latency data is sent is less than the preset number of retransmission times, the data of the short-latency communication is sent by using the SLPRB again and the number of times that the user equipment transmits the short-latency data increases by 1. If the time counted by the first timer does not exceed the first preset time, the time counted by the third timer does not exceed the second preset time, and the number of times that the short-latency data is sent is greater than or equal to the preset number of retransmission times, the third timer is reset and the short-latency random access is initiated again.

In this embodiment, a user equipment detects whether data that needs to be sent is data of short-latency communication; selects a dedicated random access resource to initiate random access when detecting that the data that needs to be sent is the data of the short-latency communication; and if an SRAR message returned by a base station is received and carries information about a dedicated random access preamble signature, selects an SLPRB corresponding to the information about the dedicated random access preamble signature from a pre-received first mapping that is preconfigured by the base station and sent by the base station, and sends, by using the SLPRB, the data of the short-latency communication to the base station according to a pre-acquired transmission format. This effectively solves a problem of long latency in uplink communication of a user equipment in the prior art, meets a short-latency communication requirement with limited resources, and significantly improves data transmission efficiency for the short-latency communication.

Further, based on the embodiment shown in FIG. 2, in step 202, a specific implementation manner for the base station to preconfigure the first mapping may be as follows: The base station may divide short-latency dedicated random access resources into multiple groups, map each group of the short-latency dedicated random access resources and the pre-defined transmission format to each group of SLPRBs so as to obtain the first mapping, and notify the first mapping to the user equipment. In addition, the base station may further perform simple scheduling for the user equipment according to an occupancy condition of the current SLPRB. It should be noted that the scheduling here is a type of preliminary scheduling, which allows occurrence of a collision and resolves contention.

Further, another implementation manner of step 201 may be as follows: The user equipment receives the short-latency dedicated random access resource that is used for the short-latency communication, preconfigured by the base station, and sent by the base station, where the short-latency dedicated random access resource includes the dedicated random access preamble signature and the time-and-frequency resources; and receives the SLPRB that is used to transmit the data of the short-latency communication, preconfigured by the base station, and sent by the base station and the transmission format pre-defined by the base station.

In addition, if the SRAR message received by the user equipment in step 206 not only includes the information about the dedicated random access preamble signature and time advance information, but also may include an SLPRB identifier, and another specific implementation manner of step 206 is as follows:

The data of the short-latency communication is sent, according to the pre-defined transmission format, to the base station by using the SLPRB corresponding to the SLPRB identifier, and simultaneously the third timer is reset and started.

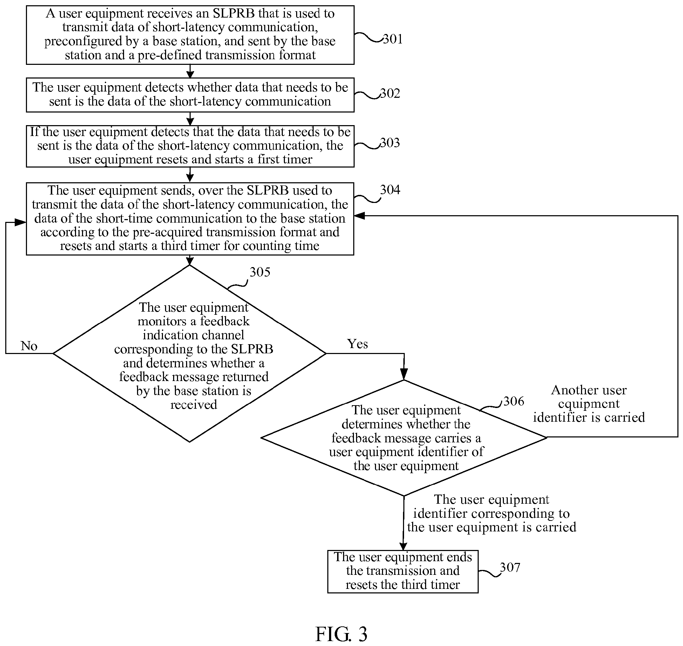

FIG. 3 is a flowchart of another embodiment of a data transmission method for uplink short-latency communication according to the present invention. In this embodiment, the technical solution in this embodiment is described in detail through an example where a user equipment does not need to obtain uplink synchronization. As shown in FIG. 3, the method in this embodiment includes:
Step 301: The user equipment receives an SLPRB that is used to transmit data of short-latency communication, preconfigured by a base station, and sent by the base station and a pre-defined transmission format.
Step 302: The user equipment detects whether data that needs to be sent is the data of the short-latency communication.
Step 303: If the user equipment detects that the data that needs to be sent is the data of the short-latency communication, the user equipment resets and starts a first timer.

Specifically, the first timer is used to calculate a time required for the short-latency communication.

Step 304: The user equipment sends, by using the SLPRB used to transmit the data of the short-latency communication, the data of the short-latency communication to the base station according to the pre-acquired transmission format and resets and starts a third timer for time counting.

In this embodiment, the data of the short-latency communication sent by using the SLPRB includes: a user equipment identifier, a destination node address, and content of the short-latency communication.

Step 305: The user equipment monitors a feedback indication channel corresponding to the SLPRB and determines whether a feedback message returned by the base station is received; and if yes, perform step 306; and if not, perform step 304.

Step 306: The user equipment determines whether the feedback message carries a user equipment identifier of the user equipment; and if the user equipment identifier of the user equipment is carried, perform step 307; and if another user equipment identifier is carried, perform step 304.

Step 307: The user equipment ends the transmission and resets the third timer.

It should further be noted that if the data of the short-latency communication is relatively large and transmission cannot be completed at a time, the SLPRB may continue to be occupied to transmit the short-latency data and transmission of the user equipment identifier is omitted till the base station is notified of the end of the transmission.

In this embodiment, the base station monitors the feedback indication channel corresponding to the SLPRB; receives the data of the short-latency communication transmitted by the user equipment; and if the base station is capable of successfully decoding the data of the short-latency communication, sends the user equipment identifier by using the feedback indication channel corresponding to the SLPRB; and according to the destination node address in the data of the short-latency communication, establishes a bearer or selects a bearer from pre-established bearers as a forwarding bearer.

In addition, when the base station fails to decode the received data of the short-latency communication or does not receive the corresponding data of the short-latency communication, the SLPRB continues to be monitored.

It should be noted that if in step 301 the base station maps in advance the SLPRB that is configured to be used to transmit the data of the short-latency communication with the destination node address, and notifies the mapping to the user equipment, in step 304 the destination node address can be omitted in the data of the short-latency communication sent by the user equipment by using the SLPRB.

It should be noted that if the time counted by the first timer exceeds a first preset time, that is, in the case of overflow, the user equipment transmits the data of the short-latency communication in a normal communication manner. If the time counted by the first timer does not exceed the first preset time and the time counted by the third timer does not exceed a second preset time, the feedback indication channel corresponding to the SLPRB continues to be monitored. If the time counted by the first timer does not exceed the first preset time and the time counted by the third timer exceeds the second preset time, the data of the short-latency communication is sent by using the SLPRB again to the base station.

In this embodiment, a user equipment detects whether data that needs to be sent is data of short-latency communication, and sends, by using an SLPRB used to transmit the data of the short-latency communication, the data of the short-latency communication to a base station according to a pre-acquired transmission format when detecting that the data that needs to be sent is the data of the short-latency communication. This effectively solves a problem of long latency in uplink communication of a user equipment in the prior art, meets a short-latency communication requirement with limited resources, and significantly improves data transmission efficiency for the short-latency communication.

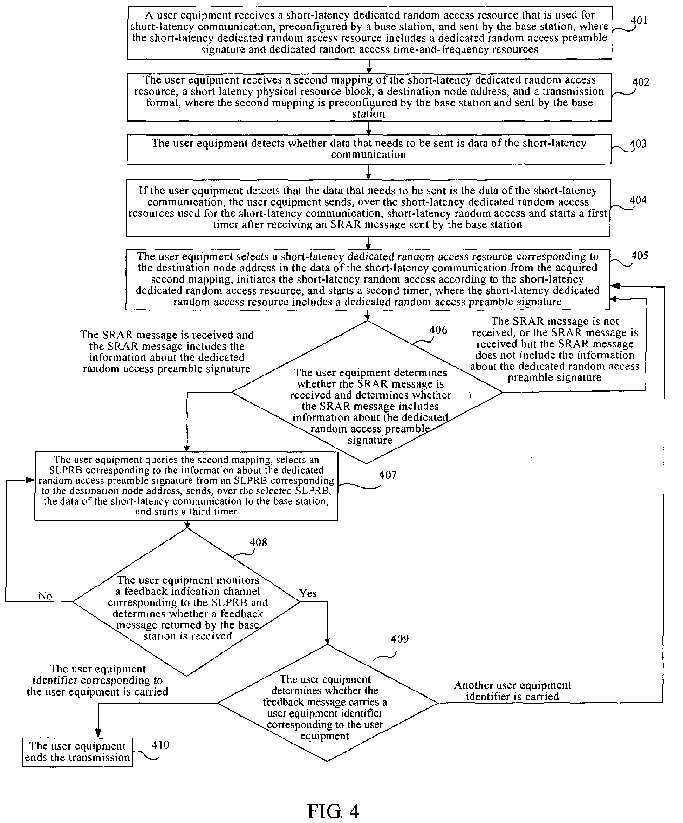

FIG. 4 is a flowchart of another embodiment of a data transmission method for uplink short-latency communication according to the present invention. In this embodiment, the technical solution in this embodiment is described in detail through an example where a user equipment needs to obtain uplink synchronization. As shown in FIG. 4, the method in this embodiment includes:
Step 401: The user equipment receives short-latency dedicated random access resources that are used for short-latency communication, preconfigured by a base station, and sent by the base station, where the short-latency dedicated random access resources include a dedicated random access preamble signature and dedicated random access time-and-frequency resources.

In this embodiment, the base station may divide the short-latency dedicated random access resources into multiple groups, maps each group of the short-latency dedicated random access resources to each group of SLPRBs, uses the mapped SLPRBs as SLPRBs used to transmit the data of the short-latency communication, and sends the SLPRBs to the user equipment.

Specifically, the base station divides in advance a part of random access resources as the short-latency dedicated random access resources used to identify short-latency uplink communication. The short-latency dedicated random access resources include: a dedicated random access preamble signature and dedicated random access time-and-frequency resources. The uplink short-latency communication dedicated random access resources are no longer used in normal communication.

Step 402: The user equipment receives a second mapping between a short-latency dedicated random access resource, a short latency physical resource block, a destination node address, and a transmission format, where the second mapping is preconfigured by the base station and sent by the base station.

In this embodiment, the base station may acquire a destination node address of the short-latency communication of the user from subscription information of the user equipment, or may acquire the destination node address from the user equipment when establishing a connection earlier or initially accessing a network. The base station may further map a group of the short-latency dedicated random access resources and the pre-defined transmission format to the acquired destination node address, so as to obtain the second mapping between the short-latency dedicated random access resource, the SLPRB, the transmission format, and the destination node address, and finally send the second mapping to the user equipment.

Step 403: The user equipment detects whether data that needs to be sent is the data of the short-latency communication.

Step 404: If the user equipment detects that the data that needs to be sent is the data of the short-latency communication, the user equipment sends, by using the short-latency dedicated random access resource used for the short-latency communication, a short-latency random access message and starts a first timer after receiving an SRAR message sent by the base station.

Step 405: The user equipment selects from the acquired second mapping a short-latency dedicated random access resource corresponding to the destination node address in the data of the short-latency communication, initiates the short-latency random access according to the short-latency dedicated random access resource, and starts a second timer, where the short-latency dedicated random access resource includes a dedicated random access preamble signature.

Specifically, the first timer is used to calculate a time required for the short-latency communication. The second timer is used to calculate a time for monitoring the SRAR message after the user equipment sends the dedicated random access preamble signature.

Step 406: The user equipment determines whether the SRAR message is received and determines whether the SRAR message includes information about the dedicated random access preamble signature; and if the SRAR message is received and the SRAR message includes the information about the dedicated random access preamble signature, perform step 407; and if the SRAR message is not received, or the SRAR message is received but the SRAR message does not include the information about the dedicated random access preamble signature, perform step 405.

Step 407: The user equipment queries the second mapping, selects an SLPRB corresponding to the information about the dedicated random access preamble signature from an SLPRB corresponding to the destination node address, sends the data of the short-latency communication to the base station by using the selected SLRPB according to the pre-defined transmission format, and starts a third timer.

It should be noted that because the second mapping has already been preconfigured on the base station, the data of the short-latency communication sent by using the selected SLPRB by the user equipment may include only a user equipment identifier and content of the short-latency communication, that is, the destination node address does not need to be sent again.

If the SRAR message further includes an SLPRB identifier, another specific implementation manner of step 407 may be as follows: The data of the short-latency communication is sent to the base station by using the SLPRB corresponding to the SLPRB identifier and the third timer is started.

In this embodiment, when determining that the received SRAR message carries the information about the dedicated random access preamble signature, the user equipment stops the second timer and counts the number of times that the user equipment transmits the data of the short-latency communication as 1. In addition, the third timer is used to calculate a time for monitoring, after the data of the short-latency communication is sent, a feedback indication channel corresponding to the SLPRB that is used to transmit the data of the short-latency communication.

Step 408: The user equipment monitors the feedback indication channel corresponding to the SLPRB and determines whether a feedback message returned by the base station is received; and if yes, perform step 409; and if not, perform step 407.

In this embodiment, a conflict may occur because a contention-based solution is used. Therefore, to resolve contention and ensure successful transmission, each SLPRB used to transmit the data of the short-latency communication corresponds to a feedback indication channel used to transmit a feedback message.

Step 409: The user equipment determines whether the feedback message carries a user equipment identifier corresponding to the user equipment; and if the user equipment identifier corresponding to the user equipment is carried, perform step 410; and if another user equipment identifier is carried, perform step 405.

Step 410: The user equipment ends the transmission.

It should further be noted that if the data of the short-latency communication is relatively large and transmission cannot be completed at a time, the SLPRB may continue to be occupied to transmit the short-latency data and transmission of the user equipment identifier is omitted till the base station is notified of the end of the transmission.

In this embodiment, after receiving the short-latency random access, according to the second mapping between the short-latency dedicated random access resource, the destination node address, and the SLPRB, the base station pre-establishes a bearer with a core network or selects a bearer from pre-established bearers as a forwarding bearer. Therefore, when the base station successfully decodes the received data of the short-latency communication, the base station sends, by using the feedback indication channel, the feedback message carrying the user equipment identifier and forwards the data of the short-latency communication to the core network by using the pre-established or selected forwarding bearer, thereby effectively reducing a transmission latency.

It should be noted that if the time counted by the first timer exceeds a first preset time, that is, in the case of overflow, the user equipment transmits the data of the short-latency communication in a normal communication manner. If the time counted by the first timer does not exceed the first preset time and the time counted by the third timer does not exceed a second preset time, the feedback indication channel corresponding to the SLPRB continues to be monitored. If the time counted by the first timer does not exceed the first preset time, the time counted by the third timer exceeds the second preset time, and the number of times that the short-latency data is sent is less than the preset number of retransmission times, the data of the short-latency communication is sent by using the SLPRB again and the number of times that the user equipment transmits the short-latency data increases by 1. If the time counted by the first timer does not exceed the first preset time, the time counted by the third timer does not exceed the second preset time, and the number of times that the short-latency data is sent is greater than or equal to the preset number of retransmission times, the third timer is reset and the short-latency random access message is initiated again.

In this embodiment, a user equipment detects whether data that needs to be sent is data of short-latency communication; when detecting that the data that needs to be sent is the data of the short-latency communication, acquires, according to a pre-acquired second mapping between a dedicated random access resource, a destination node address, an SLPRB, and a transmission format, a random access resource corresponding to a destination node address in the data of the short-latency communication, and initiates a random access, where the second mapping is configured by a base station; and when an SRAR returned by the base station is received and carries information about a dedicated random access preamble signature, queries the second mapping, selects an SLPRB corresponding to the information about the dedicated random access preamble signature from an SLPRB corresponding to the destination node address, and sends, by using the selected SLRPB, the data of the short-latency communication to the base station according to the transmission format. This effectively solves a problem of long latency in uplink communication of a user equipment in the prior art, meets a short-latency communication requirement with limited resources, and significantly improves data transmission efficiency for the short-latency communication.

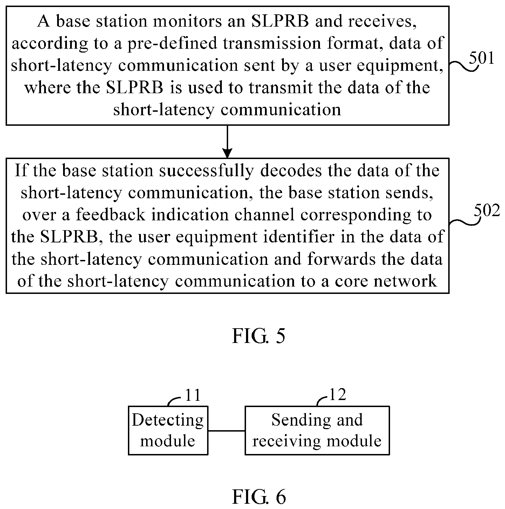

FIG. 5 is a flowchart of still another embodiment of a data transmission method for uplink short-latency communication according to the present invention. As shown in FIG. 5, the method in this embodiment includes:
Step 501: A base station monitors an SLPRB and receives, according to a pre-defined transmission format, data of short-latency communication sent by a user equipment, where the SLPRB is used to transmit the data of the short-latency communication.

It should be noted that if the base station does not preconfigure a second mapping between a short-latency dedicated random access resource, an SLPRB, a destination node address, and a transmission format, the received data of the short-latency communication includes: a user equipment identifier, a destination node address, and content of the short-latency communication; and if the base station preconfigures the second mapping, the received data of the short-latency communication may include only the user equipment identifier and the content of the short-latency communication.

Step 502: If the base station successfully decodes the data of the short-latency communication, the base station sends, by using a feedback indication channel corresponding to the SLPRB, the user equipment identifier in the data of the short-latency communication and forwards the data of the short-latency communication to a core network.

In this embodiment, the SLPRB may specifically be a resource for transmitting the data of the short-latency communication, so as to further reduce a transmission latency. In addition, a feedback indication channel used to transmit a feedback message exists for each SLPRB used to transmit the data of the short-latency communication, so as to resolve contention and ensure successful transmission.

In this embodiment, a base station receives, by monitoring an SLPRB used to transmit data of short-latency communication, the data of the short-latency communication sent by a user equipment; and if the data of the short-latency communication is successfully decoded, sends a user equipment identifier by using a feedback indication channel and forwards the data of the short-latency communication. This effectively solves a problem of long latency in uplink communication of a user equipment in the prior art, meets a short-latency communication requirement with limited resources, and significantly improves data transmission efficiency for the short-latency communication.

Further, based on the embodiment shown in FIG. 5, before step 501, the method further includes:
preconfiguring, by the base station, the short-latency dedicated random access resource and the SLPRB and notifying the short-latency dedicated random access resource, the SLPRB, and the transmission format to the user equipment; or
preconfiguring, by the base station, the SLPRB and notifying the SLPRB and the transmission format to the user equipment; or
preconfiguring, by the base station, a first mapping between the short-latency dedicated random access resource, the SLPRB, and the transmission format and notifying the first mapping to the user equipment.

The short latency physical resource block includes a dedicated random access preamble signature and time-and-frequency resources. The transmission format includes a coding manner and a modulation manner.

In addition, the method may further includes:
preconfiguring, by the base station, the second mapping between the short-latency dedicated random access resource, the SLPRB, the pre-acquired destination node address, and the transmission format and notifying the second mapping to the user equipment.

It should further be noted that after receiving the data of the short-latency communication, the base station determines whether an access of the user equipment corresponding to the user equipment identifier can be supported; and if yes, sends an SRAR message to the user equipment, where the SRAR message includes information about a signature of a short-latency random access message and time advance volume information, and may further include SLPRB identifier information; otherwise, sends no SRAR message to the user equipment.

In addition, two specific implementation manners of step 502 may be as follows:
Manner 1: If the base station does not preconfigure the second mapping, a specific implementation manner of step 502 is as follows:
   if the base station successfully decodes the data of the short-latency communication, sending the user equipment identifier by using the feedback indication channel; and
   according to the destination node address in the data of the short-latency communication, establishing, by the base station, a bearer with the core network or selecting a matching bearer from pre-established bearers as a forwarding bearer, and forwarding the data of the short-latency communication to the core network by using the forwarding bearer.
Manner 2: If the base station preconfigures the second mapping, a specific implementation manner of step 502 is as follows:
   establishing, by the base station according to the pre-acquired destination node address, a bearer with the core network or selecting from pre-established bearers a bearer corresponding to the destination node address as a forwarding bearer; and
   if the base station successfully decodes the data of the short-latency communication, sending the user equipment identifier by using the feedback indication channel, and forwarding the data of the short-latency communication by using the forwarding bearer.

FIG. 6 is a schematic structural diagram of an embodiment of a user equipment according to the present invention. As shown in FIG. 6, the user equipment in this embodiment includes: a detecting module 11 and a sending and receiving module 12. The detecting module 11 is configured to detect whether data that needs to be sent is data of short-latency communication. The sending and receiving module 12 is configured to send, by using an SLPRB, the data of the short-latency communication to a base station according to a pre-acquired transmission format if the detecting module 11 detects that the data that needs to be sent is the data of the short-latency communication, where the SLPRB is used to transmit the data of the short-latency communication.

The user equipment in this embodiment may execute the technical solution of the method in the embodiment shown in FIG. 1 and implementation principles of the technical solutions are similar. Therefore, no further details are provided herein.

In this embodiment, a user equipment detects whether data that needs to be sent is data of short-latency communication, and sends, by using an SLPRB used to transmit the data of the short-latency communication, the data of the short-latency communication to a base station according to a pre-acquired transmission format when detecting that the data that needs to be sent is the data of the short-latency communication. Because establishment of a wireless resource control connection in the prior art is not required, a problem of long latency in uplink communication of a user equipment in the prior art is effectively solved, a short-latency communication requirement is met with limited resources, and data transmission efficiency for the short-latency communication is significantly improved.

Further, in another embodiment of the present invention, based on the embodiment shown in FIG. 6, the user equipment in this embodiment further includes: a second short-latency random access processing module, configured to select a short-latency dedicated random access resource and initiate a short-latency random access message to the base station, where the short-latency random access resource includes a dedicated random access preamble signature and time-and-frequency resources.

In addition, the sending and receiving module 12 is further configured to receive a short-latency random access response message returned by the base station, where the short-latency random access response message carries information about the dedicated random access preamble signature and a short latency physical resource block identifier.

The sending and receiving module 12 is specifically configured to send, by using an SLPRB corresponding to the SLPRB identifier, the data of the short-latency communication to the base station according to the transmission format.

Further, in still another embodiment of the present invention, based on the embodiment shown in FIG. 6, the sending and receiving module 12 of the user equipment in this embodiment is further configured to receive an SLPRB that is used to transmit the data of the short-latency communication and the transmission format, where the SLPRB and the transmission format are preconfigured by the base station and sent by the base station.

In addition, the sending and receiving module 12 is further configured to send, by using the SLPRB, the data of the short-latency communication again if another user equipment identifier is received within a preset time or no message is received within the preset time.

The user equipment in this embodiment may execute the technical solution of the embodiment shown in FIG. 3 and implementation principles of the technical solutions are similar. Therefore, no further details are provided herein.

In this embodiment, a user equipment detects whether data that needs to be sent is data of short-latency communication, and sends, by using an SLPRB used to transmit the data of the short-latency communication, the data of the short-latency communication to a base station according to a pre-acquired transmission format when detecting that the data that needs to be sent is the data of the short-latency communication. This effectively solves a problem of long latency in uplink communication of a user equipment in the prior art, meets a short-latency communication requirement with limited resources, and significantly improves data transmission efficiency for the short-latency communication.

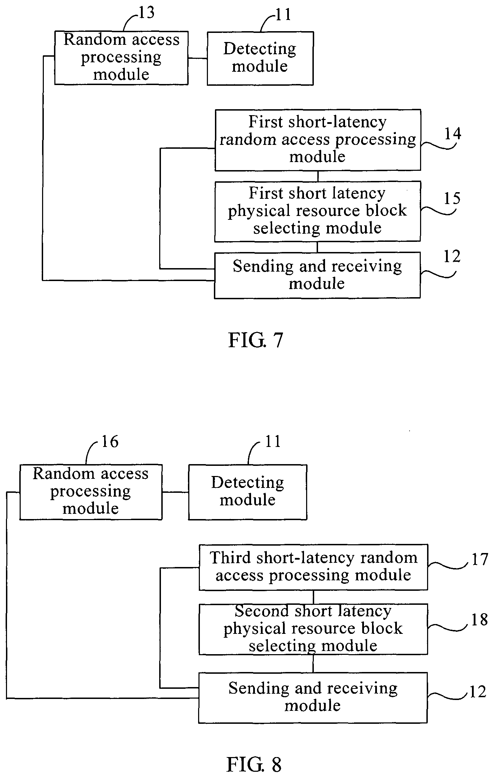

FIG. 7 is a schematic structural diagram of another embodiment of a user equipment according to the present invention. As shown in FIG. 7, based on the embodiment shown in FIG. 6, when the user equipment in this embodiment needs to obtain uplink synchronization information, the user equipment may further include a random access processing module 13, configured to: if the detecting module 11 detects that the data that needs to be sent is the data of the short-latency communication, send by using the short-latency random access message by using the short-latency dedicated random access resource used for the short-latency communication and receive the short-latency random access response message sent by the base station.

In addition, the sending and receiving module 12 of the user equipment is further configured to receive a first mapping between the short-latency dedicated random access resource used for the short-latency communication, the SLPRB used to transmit the data of the short-latency communication, and the transmission format, where the first mapping is preconfigured by the base station and sent by the base station, and the short-latency dedicated random access resource includes a dedicated random access preamble signature and dedicated random access time-and-frequency resources.

Further, the user equipment further includes: a first short-latency random access processing module 14 and a first short latency physical resource block selecting module 15. The first short-latency random access processing module 14 is configured to select a short-latency dedicated random access resource and initiate the short-latency random access to the base station, where the short-latency dedicated random access resource includes a dedicated random access preamble signature. The sending and receiving module 12 is further configured to receive the SRAR message returned by the base station. The first short latency physical resource block selecting module 15 is configured to: if the SRAR message that is returned by the base station and received by the sending and receiving module 12 carries information about the dedicated random access preamble signature, select from the first mapping an SLPRB corresponding to the information about the dedicated random access preamble signature.

The sending and receiving module 12 is configured to send the data of the short-latency communication to the base station by using the SLPRB corresponding to the information about the dedicated random access preamble signature.

Further, the random access processing module 13 is further configured to initiate the short-latency random access again if another user equipment identifier is received within a preset time or no message is received within the preset time; or
the sending and receiving module 12 is further configured to send, by using the SLPRB, the data of the short-latency communication again if another user equipment identifier is received within a preset time or no message is received within the preset time.

Further, the random access processing module 13 is further configured to initiate the short-latency random access again when the number of times that the sending and receiving module 12 sends the short-latency data again is greater than or equal to the preset number of retransmission times.

The user equipment in this embodiment may execute the technical solution of the method in the embodiment shown in FIG. 2 and implementation principles of the technical solutions are similar. Therefore, no further details are provided herein.

In this embodiment, a user equipment detects whether data that needs to be sent is data of short-latency communication; selects a dedicated random access resource to initiate random access when detecting that the data that needs to be sent is the data of the short-latency communication; and if an SRAR message returned by a base station is received and carries information about a dedicated random access preamble signature, selects an SLPRB corresponding to the information about the dedicated random access preamble signature from a pre-received first mapping that is preconfigured by the base station and sent by the base station, and sends, by using the SLPRB, the data of the short-latency communication to the base station according to a pre-acquired transmission format. This effectively solves a problem of long latency in uplink communication of a user equipment in the prior art, meets a short-latency communication requirement with limited resources, and significantly improves data transmission efficiency for the short-latency communication.

Further, if the short-latency random access response further carries an SLPRB identifier, the first short latency physical resource block selecting module 15 is configured to select an SLPRB corresponding to the SLPRB identifier.

FIG. 8 is a schematic structural diagram of still another embodiment of a user equipment according to the present invention. As shown in FIG. 8, based on the embodiment shown in FIG. 6, when the user equipment in this embodiment needs to obtain synchronization, the user equipment may further include a random access processing module 16, configured to: if the detecting module 11 detects that the data that needs to be sent is the data of the short-latency communication, send the short-latency random access message by using the short-latency dedicated random access resource used for the short-latency communication and receive the short-latency random access response message sent by the base station.

In addition, the sending and receiving module 12 of the user equipment is further configured to receive a short-latency dedicated random access resource that is used for short-latency communication, preconfigured by a base station, and sent by the base station, where the short-latency dedicated random access resource includes a dedicated random access preamble signature and dedicated random access time-and-frequency resources.

Further, the sending and receiving module 12 is further configured to receive a second mapping between the short-latency dedicated random access resource, a short latency physical resource block, a destination node address, and the transmission format, where the second mapping is preconfigured by the base station and sent by the base station.

Further, the user equipment further includes: a third short-latency random access processing module 17 and a second short latency physical resource block selecting module 18. The third short-latency random access processing module 17 is configured to select from the acquired second mapping a short-latency dedicated random access resource corresponding to the destination node address in the data of the short-latency communication and initiate the short-latency random access to the base station according to the short-latency dedicated random access resource, where a short-latency dedicated random access resource includes a dedicated random access preamble signature. The sending and receiving module 12 is further configured to receive the SRAR message returned by the base station. The second short latency physical resource block selecting module is configured to: if the short-latency random access response message that is returned by the base station and received by the sending and receiving module 12 carries the dedicated random access preamble signature, query the second mapping and select an SLPRB corresponding to the information about the dedicated random access preamble signature from an SLPRB corresponding to the destination node address.

The sending and receiving module 12 is specifically configured to send, by using the SLPRB corresponding to the information about the dedicated random access preamble signature, the data of the short-latency communication to the base station according to the transmission format.

Further, the random access processing module 16 is further configured to initiate the short-latency random access again if another user equipment identifier is received within a preset time or no message is received within the preset time; or
the sending and receiving module 12 is further configured to send, by using the SLPRB, the data of the short-latency communication again if another user equipment identifier is received within a preset time or no message is received within the preset time.

Further, the random access processing module 16 is further configured to initiate the short-latency random access again when the number of times that the sending and receiving module 12 sends the short-latency data again is greater than or equal to the preset number of retransmission times.

The user equipment in this embodiment may execute the technical solution of the method in the embodiment shown in FIG. 4 and implementation principles of the technical solutions are similar. Therefore, no further details are provided herein.

In this embodiment, a user equipment detects whether data that needs to be sent is data of short-latency communication; when detecting that the data that needs to be sent is the data of the short-latency communication, acquires, according to a pre-acquired second mapping between a dedicated random access resource, a destination node address, an SLPRB, and a transmission format, a random access resource corresponding to a destination node address in the data of the short-latency communication, and initiates a random access, where the second mapping is configured by a base station; and when an SRAR returned by the base station is received and carries information about a dedicated random access preamble signature, queries the second mapping, selects an SLPRB corresponding to the information about the dedicated random access preamble signature from an SLPRB corresponding to the destination node address, and sends, by using the selected SLRPB, the data of the short-latency communication to the base station according to the transmission format. This effectively solves a problem of long latency in uplink communication of a user equipment in the prior art, meets a short-latency communication requirement with limited resources, and significantly improves data transmission efficiency for the short-latency communication.

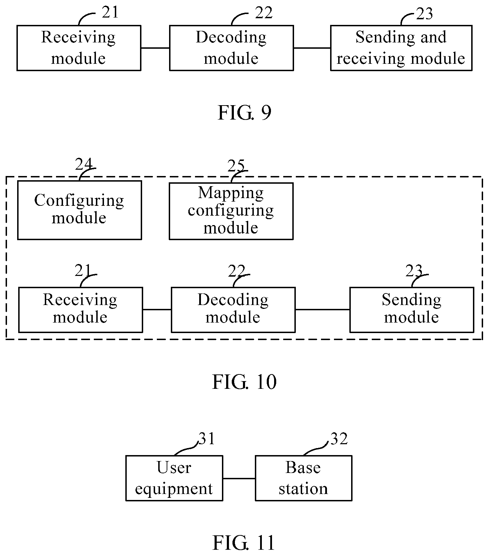

FIG. 9 is a schematic structural diagram of an embodiment of a base station according to the present invention. As shown in FIG. 9, a base station in this embodiment includes: a receiving module 21, a decoding module 22, and a sending and receiving module 23. The receiving module 21 is configured to monitor an SLPRB and receive, according to a pre-defined transmission format, data of short-latency communication sent by a user equipment, where the SLPRB is used to transmit the data of the short-latency communication. The decoding module 22 is configured to decode the data of the short-latency communication received by the receiving module 21. The sending and receiving module 23 is configured to: if the decoding module 22 successfully decodes the data of the short-latency communication, send, by using a feedback indication channel corresponding to the SLPRB, a user equipment identifier in the data of the short-latency communication and forward the data of the short-latency communication to a core network.

The base station in this embodiment may execute the technical solution of the method in the embodiment shown in FIG. 5 and implementation principles of the technical solutions are similar. Therefore, no further details are provided herein.

In this embodiment, a base station receives, by monitoring an SLPRB used to transmit data of short-latency communication, the data of the short-latency communication sent by a user equipment; and if the data of the short-latency communication is successfully decoded, sends, by using a feedback indication channel corresponding to the SLPRB, a user equipment identifier in the data of the short-latency communication; and forwards the data of the short-latency communication. This effectively solves a problem of long latency in uplink communication of a user equipment in the prior art, meets a short-latency communication requirement with limited resources, and significantly improves data transmission efficiency for the short-latency communication.

FIG. 10 is a schematic structural diagram of another embodiment of a base station according to the present invention. Based on the embodiment shown in FIG. 9, as shown in FIG. 10, the base station may further include: a configuring module 24, configured to preconfigure a short-latency dedicated random access resource used for short-latency communication, an SLPRB used to transmit the data of the short-latency communication, and a transmission format and notify the short-latency dedicated random access resource, the SLPRB, and the transmission format to the user equipment; or
a configuring module 24, configured to preconfigure an SLPRB used to transmit the data of the short-latency communication and notify the SLPRB and a transmission format to the user equipment; or
a configuring module 24, configured to preconfigure a first mapping between a short-latency dedicated random access resource used for short-latency communication, an SLPRB used to transmit the data of short-latency communication, and a transmission format and notify the first mapping to the user equipment.

The short latency physical resource block includes a dedicated random access preamble signature and time-and-frequency resources. The transmission format includes a coding manner and a modulation manner.

Further, the base station may further include: a mapping configuring module 25, configured to preconfigure a second mapping between the short-latency dedicated random access resource, the SLPRB, a pre-acquired destination node address, and the transmission format and notify the second mapping to the user equipment.

In this embodiment, a base station receives, by monitoring an SLPRB used to transmit data of short-latency communication, the data of the short-latency communication sent by a user equipment; and if the data of the short-latency communication is successfully decoded, sends a user equipment identifier over a feedback indication channel; and pre-establishes a bearer with a core network according to a pre-established second mapping or selects a matching bearer from pre-established bearers as a forwarding bearer, and forwards the data of the short-latency communication to the core network; or according to a destination node address in the received data of the short-latency communication, establishes a bearer with a core network or selects a matching bearer from pre-established bearers as a forwarding bearer, and forwards the data of the short-latency communication to the core network. This effectively solves a problem of long latency in uplink communication of a user equipment in the prior art, meets a short-latency communication requirement with limited resources, and significantly improves data transmission efficiency for the short-latency communication.

FIG. 11 is a schematic structural diagram of an embodiment of a data transmission system for uplink short-latency communication according to the present invention. As shown in FIG. 11, the system includes: a user equipment 31 and a base station 32. The user equipment 31 may be a user equipment in the embodiments shown in FIG. 6 to FIG. 8. The base station 32 may execute the base station in the embodiment shown in FIG. 9 or FIG. 10. The implementation principles of the user equipments and the base stations are respectively similar and therefore no further details are provided herein.

The system in this embodiment effectively solves a problem of long latency in uplink communication of a user equipment in the prior art, meets a short-latency communication requirement with limited resources, and significantly improves data transmission efficiency for the short-latency communication.

Persons of ordinary skill in the art may understand that all or a part of the steps of the foregoing method embodiments may be implemented by a program instructing relevant hardware. The foregoing program may be stored in a computer readable storage medium. When the program runs, the steps of the foregoing method embodiments are performed. The foregoing storage medium includes any medium capable of storing program code, such as a ROM, a RAM, a magnetic disk, or an optical disc.

## Claims

1. A data transmission method for uplink communication, comprising the following sequence of steps:
receiving (201), by a user equipment, a first mapping between a dedicated random access resource, a physical resource block, and a transmission format, wherein the first mapping is preconfigured by a base station and sent by the base station; wherein
the dedicated random access resource comprises a dedicated random access preamble signature and time-and-frequency resources, the transmission format comprises a coding manner and a modulation manner, and the physical resource block comprises time-and-frequency resources; and
detecting (202), by the user equipment, whether data that needs to be sent is data of the uplink communication; and
if the UE detects that the data that needs to be sent is data of the uplink communication, sending (203) by the UE, by using a dedicated random access resource used for the uplink communication, a random access and resetting and starting a first timer, used to calculate a total time required for the uplink communication, after receiving a corresponding random access response message sent by the base station; and
selecting (204), by the user equipment, a dedicated random access resource and initiating a random access to the base station and resetting and starting a second timer, used to calculate a time for monitoring a corresponding random access response message returned by the base station after the user equipment sends the random access, wherein the dedicated random access resource comprises a dedicated random access preamble signature and time-and-frequency resources; and
if the random access response message that is returned by the base station and received by the user equipment carries information about a dedicated random access preamble signature, selecting (206), by the user equipment, from the first mapping a physical resource block and a transmission format corresponding to the information about a dedicated random access preamble signature; and
sending, by the user equipment, by using the physical resource block corresponding to the information about a dedicated random access preamble signature, the data of the uplink communication to the base station according to the transmission format corresponding to the information about a dedicated random access preamble signature and simultaneously resetting and starting a third timer; and
monitoring (207), by the UE, a feedback indication channel corresponding to the physical resource block and determining, whether a feedback message returned by the base station is received; and
if the feedback message is received, determining (208), by the UE, whether the feedback message carries a user equipment identifier corresponding to the UE; and
if the user equipment identifier corresponding to the UE is carried, ending (209) the transmission, by the UE;
wherein the third timer is used to calculate a time for monitoring, after the data of the uplink communication is sent, the feedback indication channel corresponding to the physical resource block that is used to transmit the data of the uplink communication.

2. A user equipment, comprising:
a sending and receiving module (12), configured to receive a first mapping between a dedicated random access resource, a physical resource block, and a transmission format, wherein the first mapping is preconfigured by a base station and sent by the base station; and
the dedicated random access resource comprises a dedicated random access preamble signature and time-and-frequency resources, the transmission format comprises a coding manner and a modulation manner, and the physical resource block comprises time-and-frequency resources; and
a detecting module (11), configured to detect whether data that needs to be sent is data of uplink communication; and
a random access processing module (13), configured to: if the detecting module (11) detects that the data that needs to be sent is data of the uplink communication, send a random access by using the dedicated random access resource used for the uplink communication and receive a random access response message sent by the base station and reset and start a first timer, used to calculate a total time required for the uplink communication after receiving the random access response message sent by the base station; and
a first random access processing module (14), configured to select a dedicated random access resource and initiate a random access to the base station and reset and start a second timer, used to calculate a time for monitoring a corresponding random access response message returned by the base station after the user equipment sends the random access, wherein the dedicated random access resource comprises a dedicated random access preamble signature and time-and-frequency resources;
wherein the sending and receiving module (12) is further configured to receive the random access response message returned by the base station; and
a first physical resource block and transmission format selecting module, configured to if the random access response message that is returned by the base station and received by the sending and receiving module (12) carries information about a dedicated random access preamble signature, select from the first mapping a physical resource block and a transmission format corresponding to the information about a dedicated random access preamble signature;
wherein the sending and receiving module (12) is further configured to send, by using the physical resource block corresponding to the information about a dedicated random access preamble signature, the data of the uplink communication to the base station according to the transmission format corresponding to the information about the dedicated random access preamble signature and simultaneously reset and start a third timer; and
wherein the sending and receiving module (12) is further configured to monitor a feedback indication channel corresponding to the physical resource block and determine, whether a feedback message returned by the base station is received; and
wherein the sending and receiving module (12) is further configured to determine, if the feedback message is received, whether the feedback message carries a user equipment identifier corresponding to the UE; and
wherein the sending and receiving module (12) is further configured to end the transmission, if the user equipment identifier corresponding to the UE is carried;
wherein the third timer is used to calculate a time for monitoring, after the data of the uplink communication is sent, the feedback indication channel corresponding to the physical resource block that is used to transmit the data of the uplink communication.

## Patentansprüche

1. Datenübertragungsverfahren für Uplink-Kommunikation, umfassend die folgende Schrittabfolge:
Empfangen (201), durch ein Benutzergerät, einer ersten Abbildung zwischen einer dedizierten Erstzugangsressource, einem physischen Ressourcenblock und einem Übertragungsformat, wobei die erste Abbildung durch eine Basisstation vorkonfiguriert ist und durch die Basisstation gesendet wird; wobei
die dedizierte Erstzugangsressource eine dedizierte Erstzugangspräambelsignatur und Zeit-und-Frequenz-Ressourcen umfasst, das Übertragungsformat eine Codierart und eine Modulationsart umfasst und der physische Ressourcenblock Zeit-und-Frequenz-Ressourcen umfasst; und
Detektieren (202), durch das Benutzergerät, ob zu sendende Daten Daten der Uplink-Kommunikation sind; und
wenn das UE detektiert, dass zu sendende Daten Daten der Uplink-Kommunikation sind, Senden (203) durch das UE, durch Verwendung einer für die Uplink-Kommunikation verwendeten dedizierten Erstzugangsressource, eines Erstzugangs und Rücksetzen und Starten eines ersten Timers, der verwendet wird zum Berechnen einer für die Uplink-Kommunikation erforderlichen Gesamtzeit, nach Empfangen einer durch die Basisstation gesendeten entsprechenden Erstzugangsantwortnachricht; und
Auswählen (204), durch das Benutzergerät, einer dedizierten Erstzugangsressource und Initiieren eines Erstzugangs zu der Basisstation und Rücksetzen und Starten eines zweiten Timers, der verwendet wird zum Berechnen einer Zeit zum Überwachen einer durch die Basisstation zurückgesendeten entsprechenden Erstzugangsantwortnachricht, nachdem das Benutzergerät den Erstzugang gesendet hat, wobei die dedizierte Erstzugangsressource eine dedizierte Erstzugangspräambelsignatur und Zeit-und-Frequenz-Ressourcen umfasst; und
wenn die Erstzugangsantwortnachricht, die durch die Basisstation zurückgesendet wird und durch das Benutzergerät empfangen wird, Informationen über eine dedizierte Erstzugangspräambelsignatur führt, Auswählen (206), durch das Benutzergerät, aus der ersten Abbildung eines physischen Ressourcenblocks und eines den Informationen über eine dedizierte Erstzugangspräambelsignatur entsprechenden Übertragungsformats; und
Senden, durch das Benutzergerät, durch Verwendung des den Informationen über eine dedizierte Erstzugangspräambelsignatur entsprechenden physischen Ressourcenblocks, der Daten der Uplink-Kommunikation an die Basisstation gemäß dem den Informationen über eine dedizierte Erstzugangspräambelsignatur entsprechenden Übertragungsformat und gleichzeitig Rücksetzen und Starten eines dritten Timers; und
Überwachen (207), durch das UE, eines dem physischen Ressourcenblock entsprechenden Rückmeldanzeigekanals und Bestimmen, ob eine durch die Basisstation zurückgesendete Rückmeldenachricht empfangen wurde; und
falls die Rückmeldenachricht empfangen wurde, Bestimmen (208), durch das UE, ob die Rückmeldenachricht eine dem UE entsprechende Benutzergerätekennung führt; und
falls die dem UE entsprechende Benutzergerätekennung geführt wird, Beenden (209) der Übertragung, durch das UE;
wobei der dritte Timer verwendet wird zum Berechnen einer Zeit zum Überwachen, nachdem die Daten der Uplink-Kommunikation gesendet wurden, des dem physischen Ressourcenblock entsprechenden Rückmeldanzeigekanals, der verwendet wird zum Übertragen der Daten der Uplink-Kommunikation.

2. Benutzergerät, das Folgendes umfasst:
ein Sende- und Empfangsmodul (12), das ausgelegt ist zum Empfangen einer ersten Abbildung zwischen einer dedizierten Erstzugangsressource, einem physischen Ressourcenblock und einem Übertragungsformat, wobei die erste Abbildung durch eine Basisstation vorkonfiguriert ist und durch die Basisstation gesendet wird; und
die dedizierte Erstzugangsressource eine dedizierte Erstzugangspräambelsignatur und Zeit-und-Frequenz-Ressourcen umfasst, das Übertragungsformat eine Codierart und eine Modulationsart umfasst und der physische Ressourcenblock Zeit-und-Frequenz-Ressourcen umfasst; und
ein Detektiermodul (11), das ausgelegt ist zum Detektieren, ob zu sendende Daten Daten der Uplink-Kommunikation sind; und
ein Erstzugangsverarbeitungsmodul (13), das ausgelegt ist zum: wenn das Detektiermodul (11) detektiert, dass die zu sendenden Daten Daten der Uplink-Kommunikation sind, Senden eines Erstzugangs durch Verwendung der für die Uplink-Kommunikation verwendeten dedizierten Erstzugangsressource und Empfangen einer durch die Basisstation gesendeten Erstzugangsantwortnachricht und Rücksetzen und Starten eines ersten Timers, der verwendet wird zum Berechnen einer für die Uplink-Kommunikation erforderlichen Gesamtzeit, nach Empfangen der durch die Basisstation gesendeten entsprechenden Erstzugangsantwortnachricht; und
ein erstes Erstzugangsverarbeitungsmodul (14), das ausgelegt ist zum Auswählen einer dedizierten Erstzugangsressource und Initiieren eines Erstzugangs zu der Basisstation und Rücksetzen und Starten eines zweiten Timers, der verwendet wird zum Berechnen einer Zeit zum Überwachen einer durch die Basisstation zurückgesendeten entsprechenden Erstzugangsantwortnachricht, nachdem das Benutzergerät den Erstzugang gesendet hat, wobei die dedizierte Erstzugangsressource eine dedizierte Erstzugangspräambelsignatur und Zeit-und-Frequenz-Ressourcen umfasst; und
wobei das Sende- und Empfangsmodul (12) ferner ausgelegt ist zum Empfangen der durch die Basisstation zurückgesendeten Erstzugangsantwortnachricht; und
ein erstes Physischer-Ressourcenblock-und-Übertragungsformat-Auswahlmodul, das ausgelegt ist zum, wenn die Erstzugangsantwortnachricht, die durch die Basisstation zurückgesendet wird und durch das Sende- und Empfangsmodul (12) empfangen wird, Informationen über eine dedizierte Erstzugangspräambelsignatur führt, Auswählen aus der ersten Abbildung eines physischen Ressourcenblocks und eines den Informationen über eine dedizierte Erstzugangspräambelsignatur entsprechenden Übertragungsformats;
wobei das Sende- und Empfangsmodul (12) ferner ausgelegt ist zum Senden, durch Verwendung des den Informationen über eine dedizierte Erstzugangspräambelsignatur entsprechenden physischen Ressourcenblocks, der Daten der Uplink-Kommunikation an die Basisstation gemäß dem den Informationen über die dedizierte Erstzugangspräambelsignatur entsprechenden Übertragungsformat und gleichzeitig Rücksetzen und Starten eines dritten Timers; und
wobei das Sende- und Empfangsmodul (12) ferner ausgelegt ist zum Überwachen eines dem physischen Ressourcenblock entsprechenden Rückmeldanzeigekanals und Bestimmen, ob eine durch die Basisstation zurückgesendete Rückmeldenachricht empfangen wurde; und
wobei das Sende- und Empfangsmodul (12) ferner ausgelegt ist zum Bestimmen, falls die Rückmeldenachricht empfangen wurde, ob die Rückmeldenachricht eine dem UE entsprechende Benutzergerätekennung führt; und
wobei das Sende- und Empfangsmodul (12) ferner ausgelegt ist zum Beenden der Übertragung, falls die dem UE entsprechenden Benutzergerätekennung geführt wird;
wobei der dritte Timer verwendet wird zum Berechnen einer Zeit zum Überwachen, nachdem die Daten der Uplink-Kommunikation gesendet wurden, des dem physischen Ressourcenblock entsprechenden Rückmeldanzeigekanals, der verwendet wird zum Übertragen der Daten der Uplink-Kommunikation.

## Revendications

1. Procédé d'émission de données pour la communication de liaison montante, comprenant la séquence d'étapes suivantes consistant à :
recevoir (201), par un équipement d'utilisateur, une première mise en correspondance entre une ressource d'accès aléatoire dédiée, un bloc de ressource physique et un format d'émission, la première mise en correspondance étant préalablement configurée par une station de base et envoyée par la station de base ;
la ressource d'accès aléatoire dédiée comprenant une signature de préambule d'accès aléatoire dédiée et des ressources de temps et fréquence, le format d'émission comprenant un mode de codage et un mode de modulation, et le bloc de ressource physique comprenant des ressources de temps et fréquence ; et
déterminer (202), par l'équipement d'utilisateur, si des données qui doivent être envoyées sont des données de la communication de liaison montante ; et
si l'UE détermine que les données qui doivent être envoyées sont des données de la communication de liaison montante, envoyer (203) par l'UE, au moyen d'une ressource d'accès aléatoire dédiée utilisée pour la communication de liaison montante, un accès aléatoire, puis réinitialiser et lancer un premier temporisateur servant à calculer un temps total exigé pour la communication de liaison montante, après la réception d'un message de réponse d'accès aléatoire correspondant envoyé par la station de base ; et
sélectionner (204), par l'équipement d'utilisateur, une ressource d'accès aléatoire dédiée et lancer un accès aléatoire à la station de base, puis réinitialiser et lancer un deuxième temporisateur servant à calculer un temps pour la surveillance d'un message de réponse d'accès aléatoire correspondant renvoyé par la station de base après que l'équipement d'utilisateur a envoyé l'accès aléatoire, la ressource d'accès aléatoire dédiée comprenant une signature de préambule d'accès aléatoire dédiée et des ressources de temps et fréquence ; et
si le message de réponse d'accès aléatoire qui est renvoyé par la station de base et reçu par l'équipement d'utilisateur contient des informations concernant une signature de préambule d'accès aléatoire dédiée,
sélectionner (206), par l'équipement d'utilisateur, à partir de la première mise en correspondance, un bloc de ressource physique et un format d'émission correspondant aux informations concernant une signature de préambule d'accès aléatoire dédiée ; et
envoyer, par l'équipement d'utilisateur, au moyen du bloc de ressource physique correspondant aux informations concernant une signature de préambule d'accès aléatoire dédiée, les données de la communication de liaison montante destinée à la station de base selon le format d'émission correspondant aux informations concernant une signature de préambule d'accès aléatoire dédiée, et réinitialiser et lancer simultanément un troisième temporisateur ; et
surveiller (207), par l'UE, un canal d'indication d'informations de retour correspondant au bloc de ressource physique et déterminer si un message d'informations de retour renvoyé par la station de base est reçu ; et
si le message d'informations de retour est reçu, déterminer (208), par l'UE, si le message d'informations de retour contient un identifiant d'équipement d'utilisateur correspondant à l'UE ; et
si l'identifiant d'équipement d'utilisateur correspondant à l'UE est présent, mettre fin (209) à l'émission, par l'UE ;
le troisième temporisateur servant à calculer un temps pour la surveillance, après que les données de la communication de liaison montante ont été envoyées, du canal d'indication d'informations de retour qui correspond au bloc de ressource physique qui est utilisé pour émettre les données de la communication de liaison montante.

2. Équipement d'utilisateur, comprenant :
un module d'envoi et de réception (12), conçu pour recevoir une première mise en correspondance entre une ressource d'accès aléatoire dédiée, un bloc de ressource physique et un format d'émission, la première mise en correspondance étant préalablement configurée par une station de base et envoyée par la station de base ; et
la ressource d'accès aléatoire dédiée comprenant une signature de préambule d'accès aléatoire dédiée et des ressources de temps et fréquence, le format d'émission comprenant un mode de codage et un mode de modulation, et le bloc de ressource physique comprenant des ressources de temps et fréquence ; et
un module de détection (11), conçu pour déterminer si des données qui doivent être envoyées sont des données de la communication de liaison montante ; et
un module de traitement d'accès aléatoire (13), conçu pour : si le module de détection (11) détecte que les données qui doivent être envoyées sont des données de la communication de liaison montante, envoyer un accès aléatoire au moyen de la ressource d'accès aléatoire dédiée utilisée pour la communication de liaison montante et recevoir un message de réponse d'accès aléatoire envoyé par la station de base, puis réinitialiser et lancer un premier temporisateur servant à calculer un temps total exigé pour la communication de liaison montante après la réception du message de réponse d'accès aléatoire envoyé par la station de base ; et
un premier module de traitement d'accès aléatoire (14), conçu pour sélectionner une ressource d'accès aléatoire dédiée et lancer un accès aléatoire à la station de base, puis réinitialiser et lancer un deuxième temporisateur servant à calculer un temps pour la surveillance d'un message de réponse d'accès aléatoire correspondant renvoyé par la station de base après que l'équipement d'utilisateur a envoyé l'accès aléatoire, la ressource d'accès aléatoire dédiée comprenant une signature de préambule d'accès aléatoire dédiée et des ressources de temps et fréquence ;
le module d'envoi et de réception (12) étant également conçu pour recevoir le message de réponse d'accès aléatoire renvoyé par la station de base ; et
un premier module de sélection de bloc de ressource physique et de format d'émission, conçu pour, si le message de réponse d'accès aléatoire qui est renvoyé par la station de base et reçu par le module d'envoi et de réception (12) contient des informations concernant une signature de préambule d'accès aléatoire dédiée, sélectionner à partir de la première mise en correspondance un bloc de ressource physique et un format d'émission correspondant aux informations concernant une signature de préambule d'accès aléatoire dédiée ;
le module d'envoi et de réception (12) étant également conçu pour envoyer, au moyen du bloc de ressource physique correspondant aux informations concernant une signature de préambule d'accès aléatoire dédiée, les données de la communication de liaison montante destinée à la station de base selon le format d'émission correspondant aux informations concernant la signature de préambule d'accès aléatoire dédiée, et réinitialiser et lancer simultanément un troisième temporisateur ; et
le module d'envoi et de réception (12) étant également conçu pour surveiller un canal d'indication d'informations de retour correspondant au bloc de ressource physique et déterminer si un message d'informations de retour renvoyé par la station de base est reçu ; et
le module d'envoi et de réception (12) étant également conçu pour déterminer, si le message d'informations de retour est reçu, si le message d'informations de retour contient un identifiant d'équipement d'utilisateur correspondant à l'UE ; et
le module d'envoi et de réception (12) étant également conçu pour mettre fin à l'émission si l'identifiant d'équipement d'utilisateur correspondant à l'UE est présent ;
le troisième temporisateur servant à calculer un temps pour la surveillance, après que les données de la communication de liaison montante ont été envoyées, du canal d'indication d'informations de retour qui correspond au bloc de ressource physique qui est utilisé pour émettre les données de la communication de liaison montante.
